# EUROPEAN PATENT APPLICATION

(11) **EP 1 830 547 A1**
(43) Date of publication of application: **05.09.2007**
(21) Application number: 05818632.1
(22) Date of filing: 06.12.2005
(51) Int. Cl.: H04M 3/42

(54) **A DEVICE FOR DETECTING RING BACK TONE AND A METHOD THEREOF**

(30) Priority: 17.12.2004 CN 200410101339
(71) Applicant: Huawei Technologies Co., Ltd., Longgang District, Shenzhen Guangdong 518129 (CN)
(72) Inventor: MO, Xiaojun Huawei Administration Building, Guangdong 518129 (GU); LIU, Bin Huawei Administration Building Bantian, Guangdong 518129 (GU); LIAN, Shaoxiong Huawei Administration Building, Guangdong 518129 (CN); WANG, Kefeng Huawei Administration Building, Guangdong 518129 (CN)
(74) Representative: Manitz, Finsterwald & Partner GbR
(86) International application number: PCT/CN2005/002100
(87) International publication number: WO 2006/063505

(57) **Abstract**

An RBT detection apparatus includes a mute check module for checking whether a called signal is a mute signal and an ordinary RBT check module for checking whether the called signal is an ordinary RBT. An RBT detection method includes the steps of: measuring energy of a called signal; if the energy of the called signal is higher than a predetermined energy threshold of the mute signal, measuring the frequency of the called signal; if the frequency of the called signal equals a prescribed frequency of the ordinary RBT, measuring the duty ratio of the called signal, and if the duty ratio of the called signal equals a prescribed duty ratio of the ordinary RBT, determining the called signal is the ordinary RBT. By measuring and analyzing the energy, frequency and duty ratio of the called signal, it can be accurately judged whether the called signal is the ordinary RBT. Since the method abandons signaling analysis and processing, the inaccuracy in determining the status of the called signal due to the complicacy of signaling is avoided.

## Description

### Field of the Invention

The present invention relates to the field of signal detection technology, and particularly, to a system and a method for ring back tone detection.

### Background of the invention

Coloring Ring Back Tone (CRBT) services, i.e., customized ring back tone services or personalized ring back tone services, are widely applied in communication systems at present. CRBT services are designed to provide rich varieties of customized ring back tones for subscribers instead of an ordinary ring back tone. When a called party subscribes to CRBT services, CRBT services enable a subscriber to set up and manage his CRBT, so that a calling party will hear, upon calling, the CRBT set up by the called party. CRBT may be a piece of music or advertisement broadcast provided by the system, a voice message saved by the subscriber, or a piece of uploaded recording, etc.

When a called party subscribes to CRBT services, the very basic requirement of the CRBT services includes that a CBRT is played to a calling party only when the called party is idle, i.e., the backward speech signal is the ordinary Ring Back Tone (RBT); in other circumstances, notifications are played to the calling party, or voice messages are transmitted transparently to notify the calling party that the called party is busy or unreachable at present.

Communication equipment manufacturers and system integrators have brought forward various schemes on CRBT applications, all of which focus on the idea of adding an RBT detection device at a network node, e.g., an end office or a tandem office; the RBT detection device checks the status of the called party and accordingly determines whether an RBT shall be played.

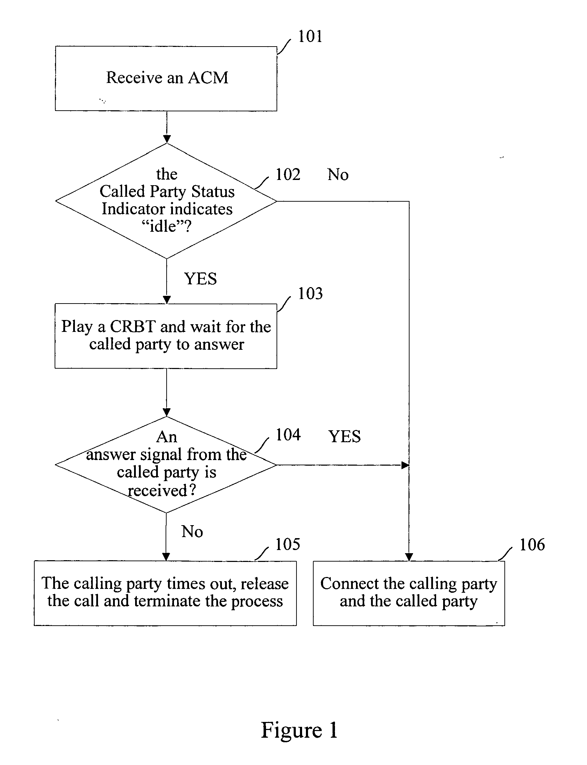

In order to provide CRBT services, an existing RBT detection device checks whether the called signal is the ordinary RBT through signaling analysis. Figure 1 is a flow chart illustrating the process of checking the status of the called party through signaling analysis and providing CRBT services accordingly. As shown in Figure 1, the process includes the following steps:
Step 101: notifying, by a switched network upon receiving an Address Complete Message (ACM) from the called party, the RBT detection device to start checking;
Step 102: checking, by the RBT detection device upon receiving the notification from the switched network, whether the Called Party Status Indicator in the ACM indicates "idle"; if the Called Party Status Indicator indicates "idle", determining that the called signal is the ordinary RBT and performing Step 103; otherwise determining that the called signal is not the ordinary RBT, requesting the switched network to connect the calling party and the called party and performing Step 106;
Step 103: playing CRBT to the calling party by the RBT detection device via the switched network, and waiting for the called party to answer;
Step 104: delivering, by the switch network, the CRBT from the RBT detection device to the calling party, checking whether an answer from the called party has been received before due time; if an answer has been received before due time, performing Step 106; otherwise performing Step 105;
Step 105: notifying the calling party by the switched network that no answer from the called party is received before due time and the call shall be released, and terminating the process;
Step 106: connecting the calling party and the called party by the switched network; listening to, by the calling party directly, the prompts, records, busy signals, etc., from the called party, or having conversation with the called party directly.

It can be seen from the above description that the method in the prior art for checking the status of the called party through signaling analysis shows a major defect that it cannot verify comprehensively and accurately whether the called signal is the ordinary RBT because of complicacy of signaling. The method checks whether the called signal is the ordinary RBT based on the Called Party Status Indicator, which may vary in ACMs of different switched networks even for a same status, therefore the RBT detection device may generate different checking results for a same status, which makes it impossible for the RBT detection device to perform accurate signal checks.

In addition, the signaling analysis method in the prior art is unable to track status changes of the called party because of insufficient signaling information. In Telephone User Part (TUP) signaling networking, since the TUP signaling does not include Call Progress Message (CPG) indicating the status change of the called party, the RBT detection device is unable to get the status change of the called party and thus unable to provide accurate signal check results.

Furthermore, such simple signaling analysis is unable to meet the requirement that the CBRT should be played to the calling party in the status of call forward, call wait, call no answer or call refuse. This is because that according to the signaling analysis method in the prior art, the called signal is no longer checked after the calling party and the called party are connected. For example, in a call wait application, when the called party is busy, the switched network will play a prompt "the subscriber you dialed is busy now, please hold on" and play the ordinary RBT afterward. However, it is expected that the switched network shall play the prompt to the calling party and play the CBRT afterward. However, it can be concluded from the above description of signaling analysis that when the prompt is played, the RBT detection device determines that the called party is not idle and will thus requests the switched network to connect the calling party and the called party without checking the called signal again, so the calling party will hear the ordinary RBT after the prompt, which fails to meet the demand of CRBT services.

### Summary of the Invention

In view of the above, an embodiment of the present invention is to provide a system and a method for Ring Back Tone (RBT) detection.

Solutions of the embodiments of the present invention are as follows.

A system for ring back tone RBT detection, includes:
a mute check module, configured to receives a called signal, check whether the called signal is a mute signal according to the energy of the called signal, and transmit the called signal to an ordinary RBT check module if the called signal is not a mute signal; and
the ordinary RBT check module, configured to check whether the called signal is an ordinary RBT according to a frequency and a duty ratio of the called signal transmitted by the mute check module,.

The system further includes a Coloring Ring Back Tone CRBT play module configured to transmit a CBRT to a switched network upon receiving a launch instruction from the ordinary RBT check module; and
the ordinary RBT check module is further configured to transmit the launch instruction to the CRBT Play module when it is determined that the called signal is the ordinary RBT.

The system further includes a busy prompt play module configured to transmit a busy prompt to the switched network upon receiving a launch instruction from the ordinary RBT check module; and
the ordinary RBT check module is further configured to check whether the called signal is a busy signal, and transmitting the launch instruction to the busy prompt play module if the called signal is a busy signal.

The system further includes a decoding module configured to receive the called signal, convert the called signal into a linear signal and transmit the linear signal to the mute check module.

A method for ring back tone detection, includes:
A) measuring energy of a called signal, and checking whether the energy of the called signal is lower than a predetermined mute-related energy threshold; if the energy of the called signal is lower than the predetermined energy threshold, determining that the called signal is a mute signal and terminating the Step; otherwise measuring the frequency of the called signal and checking whether the frequency of the called signal equals a prescribed frequency of an ordinary RBT; if the frequency of the called signal equals the prescribed frequency, performing Step B, otherwise determining that the called signal is an audio signal which is neither a busy tone nor a normal RBT and terminating the process; and
B) measuring a duty ratio of the called signal, and checking whether the duty ratio of the called signal equals a prescribed duty ratio of the ordinary RBT; if the duty ratio of the called signal equals the prescribed duty ratio, determining that the called signal is a ordinary RBT and terminating the process; otherwise determining that the called signal is a non-ordinary RBT and terminating the process.

The prescribed frequency of the ordinary RBT in Step A is 450Hz.

The prescribed duty ratio of the ordinary RBT in Step B is 1: 4.

Before measuring the energy of the called signal, Step A further includes:
converting the called signal into a linear signal.

After determining that the called signal is the non-ordinary RBT and before terminating the process, Step B further includes:
checking whether the duty ratio of the called signal equals a prescribed duty ratio of the busy signal; if the duty ratio of the called signal equals the prescribed duty ratio, determining that the called signal is the busy tone and terminating the process; otherwise determining that the called signal is an audio signal which is neither the busy tone nor the ordinary RBT.

The prescribed duty ratio of the busy tone in Step B is 1: 1.

After determining that the called signal is the mute signal, or the ordinary RBT, or the busy signal, or the audio signal which is neither the busy tone nor the ordinary RBT, and before terminating the process, the method further includes:
returning to Step A.

After determining that the called signal is the mute signal, or the ordinary RBT, or the busy signal, or the audio signal which is neither the busy tone nor the ordinary RBT, and before returning to Step A, the method further includes:
checking whether an answer signal is received from the called party; if an answer signal is received from the called party, connecting the calling party and the called party, and terminating the process; otherwise returning to Step A.

After determining that the called signal is the audio signal which is neither the busy tone nor the ordinary RBT and before returning to Step A, in Step A or Step B further includes:
connecting the calling party and the called party.

After determining that the called signal is the ordinary RBT and before terminating the process, Step B further includes:
playing a CRBT to the calling party.

After determining that the called signal is the busy tone and before terminating the process, Step B further including:
playing to the calling party a prompt indicating that the called party is busy.

Compared with the prior art, the RBT detection system and the RBT detection method provided by the present invention achieve, from the aspect of signal analysis, accurate detection of whether the called signal provides the ordinary RBT by analyzing the energy, the frequency and the duty ratio of the called signal. Since the method abandons signaling analysis and processing, the inaccuracy in determining the status of the called signal due to the complicacy of signaling is avoided. Furthermore, the status change of the called party is tracked in time by a so-called complete detection in which the status of the called signal is checked after the current called signal is checked, and the demands of playing CRBT to the calling party in the case of call forward, call wait, call no answer or call refuse are satisfied.

### Brief description of the drawings

Figure 1 is a flow chart of checking a called party through signal analysis and providing CRBT services according to the prior art;
Figure 2 is a schematic diagram illustrating a hardware networking for providing CRBT services with an RBT detection system according to an embodiment of the present invention;
Figure 3 is a flow chart of providing CRBT services with an RBT detection method according to an embodiment of the present invention.

### Detailed description of the invention

This invention is described hereinafter in detail with reference to accompanying drawings and embodiments.

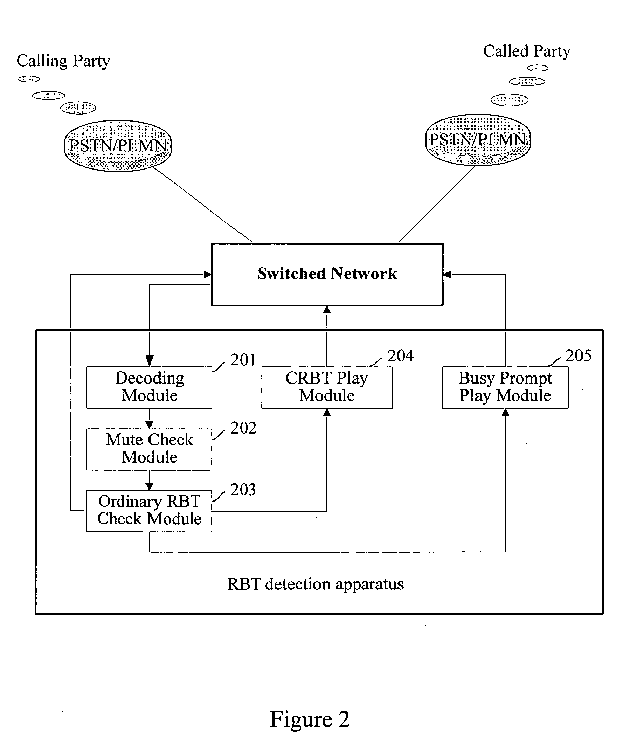

Figure 2 is a schematic diagram illustrating a hardware networking for providing CRBT services with an RBT detection system according to an embodiment of the present invention. As shown in Figure 2, the work flow in the hardware networking diagram includes: initiating a call by a Public Switched Telephone Network (PSTN) or a Public Land Mobile Network (PLMN); forwarding the called signal from the PSTN or the PLMN to an RBT detection system by the switched network upon receiving the call; checking the status of the called party by the RBT detection upon receiving the called signal and sending a corresponding instruction to the switched network according to the result of the check.

The hardware networking diagram includes the following parts.

A switched network, for transmitting the called signal to the RBT detection system, connecting or disconnecting the calling party and the called party according to the instruction from the RBT detection system and stopping the called signal transmission to the RBT detection system when the called party answers the call. To be specific, the switched network transmits the called signal to a Decoding Module 201 upon receiving an Address Complete Message (ACM) from the called party; executes an instruction from an ordinary RBT Check Module 203 of connecting the calling and the called upon receiving the instruction; plays a busy prompt to the calling party upon receiving the busy prompt from a Busy Prompt Play Module 204; plays a CRBT to the calling party upon receiving the CRBT from a CRBT Play Module 205; and stops transmitting the called signal to the Decoding Module 201 upon receiving the answer signal from the called party and connects the calling party and the called party.

An RBT detection system for checking the status of the called signal upon receiving the called signal from the switched network, and for transmitting a corresponding instruction to the switched network according to the checking result. The RBT detection system mainly includes:
the Decoding Module 201, for decoding the called signal from the switched network, i.e., converting the called signal into a linear signal and transmitting the linear signal to a Mute Check Module 202;
the Mute Check Module 202, for measuring energy of the called signal and comparing the energy of the called signal with a mute-related energy threshold which is saved in advance in the Mute Check Module 202; if the energy of the called signal is lower than the mute-related energy threshold, determining that the called signal is a mute signal; otherwise transmitting a launch instruction and the called signal to the Ordinary RBT Check Module 203;
the Ordinary RBT Check Module 203, for measuring the frequency and the duty ratio of the called signal upon receiving the launch instruction from the Mute Check Module 202, if the frequency of the called signal equals 450Hz and the duty ratio thereof is 1: 4, determining that the called signal is the ordinary RBT and transmitting the launch signal to the CRBT Play Module 204; if the frequency of the called signal equals 450Hz and the duty ratio thereof is 1: 1, determining that the called signal is a busy signal and transmitting the launch instruction to the Busy Prompt Play Module 208; otherwise determining that the called signal is an audio signal which is neither a busy signal nor an ordinary RBT, requesting the switched network to connect the calling party and the called party so that the calling party may directly hear from the called party the audio signal which is neither a busy signal nor an ordinary RBT;
the CRBT Play Module 204, for sending a CRBT saved therein to the calling party via the switched network upon receiving the launch instruction from the Ordinary RBT Check Module 203; and
the Busy Prompt Play Module 205, for sending a busy promptto the calling party via the switched network upon receiving the launch instruction from the Ordinary RBT Check Module 203.

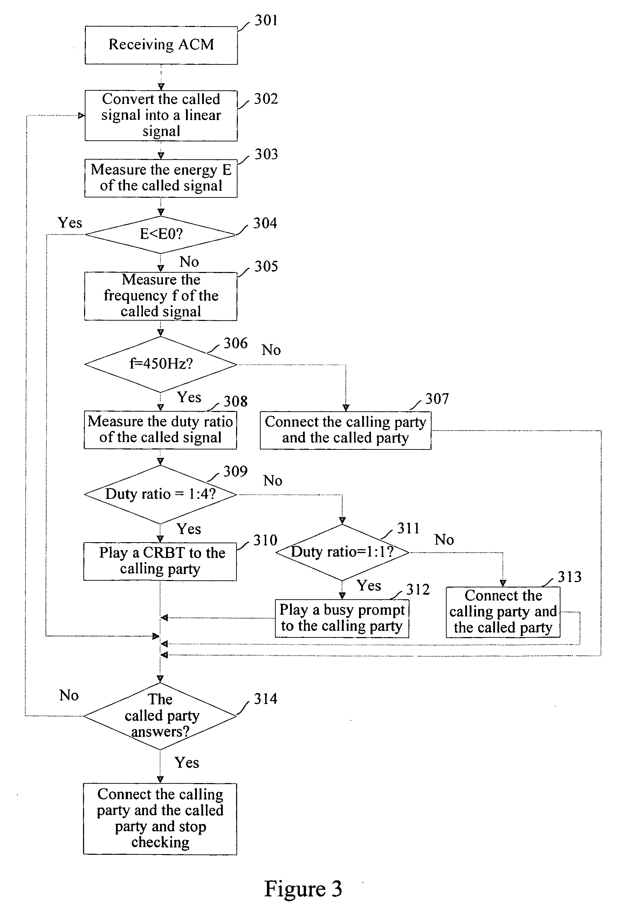

Figure 3 is a flow chart of providing CRBT services with an RBT detection method according to an embodiment of the present invention. As shown in Figure 3, the method includes the following steps:
Block 301: receiving the ACM by the switched network;
Block 302: transmitting the called signal to the Decoding Module 201 by the switched network; converting the called signal from an A-law signal into a linear signal by the Decoding Module 201 and transmitting the linear signal to the Mute Check Module 202;
Block 303: measuring the energy E of the called signal by the Mute Check Module 202;
Block 304: checking by the Mute Check Module 202 whether E < E0, a predetermined mute-related energy threshold, and if E < E0, determining that the called signal is a mute signal and performing Block 314; otherwise performing Block 305;
Block 305: transmitting the called signal to the Ordinary RBT Check Module 203 by the Mute Check Module 202, and measuring the frequency *f* of the called signal by the Ordinary RBT Check Module 203, wherein the frequency f of the called signal can be obtained through Fourier Transform;
Block 306: checking by the Ordinary RBT Check Module 203 whether f equals 450Hz, and if *f* equals 450Hz, performing Block 308; otherwise performing Block 307;
Block 307: determining by the Ordinary RBT Check Module 203 that the called signal is an audio signal which is neither a busy tone nor an ordinary RBT, i.e., a prompt or a voice record defined by the called party, and requesting the switched network to connect the calling party and the called party so that the calling party may hear from the called party the audio signal which is neither a busy tone nor an ordinary RBT; connecting the calling party and the called party by the switched network and performing Block 314;
Block 308: measuring the duty ratio of the called signal by the Ordinary RBT Check Module 203, wherein the duty ratio is the ratio between the signal duration in which the energy of the signal is higher than or equal to the mute-related energy threshold and the no-signal duration in which the energy of the signal is lower than the mute-related energy threshold;
Block 309: checking by the Ordinary RBT Check Module 203 whether the duty ratio of the called signal equals 1: 4, and if the duty ratio of the called signal equals 1: 4, performing Block 310; otherwise performing Block 311;
Block 310: determining by the Ordinary RBT Check Module 203 that the called signal is the ordinary RBT and launching the CRBT Play Module 204 to send the CRBT to the calling party via the switched network, and performing Block 314;
Block 311: checking by the Ordinary RBT Check Module 203 whether the duty ratio of the called signal equals 1: 1, and if the duty ratio of the called signal equals 1: 4, performing Block 312; otherwise performing Block 313;
Block 312: determining by the Ordinary RBT Check Module 203 that the called signal is the busy tone and launching the Busy Prompt Play Module 205 to send the busy prompt to the calling party via the switched network, and performing Block 314;
Block 313: determining by the Ordinary RBT Check Module 203 that the called signal is an audio signal which is neither a busy tone nor an ordinary RBT, requesting the switched network to connect the calling party and the called party; connecting the calling party and the called party by the switched network, and performing Block 314;
Block 314: checking by the switched network whether the called party answers, and if the called party answers, connecting the calling party and the called party and stopping the signal check; otherwise returning to Block 302.

An ordinary RBT has a frequency of 450Hz, a duty ratio of 1: 4 and a period of 5 seconds; a busy tone has a frequency of 450Hz, a duty ratio of 1: 1 and a period of 0.7 second; an audio signal which is neither a busy tone nor an ordinary RBT has an undetermined frequency, though the energy of the audio signal is higher than or equal to the mute-related energy threshold; the energy of the mute signal is lower than the mute-related energy threshold. With line noise taken into consideration, the mute-related energy threshold E0 in Block 304 may be a value greater than 0 as a preferred embodiment.

It can be seen in the above blocks that, the RBT detection method provided by the present invention is able to generate an accurate checking result no matter the called signal is a mute signal, a busy tone or an ordinary RBT; in addition, the status change of the called party is tracked in time by a so-called complete detection including the step of returning to Block 302 for checking the status of the subsequent signal after the current called signal is checked, so that the problem of being unable to learn the status change of the called party due to insufficient signaling information is thus resolved. The demand of the calling party receiving the CRBT in the status of call forward, call wait, call no answer or call refuse is also satisfied. Taking the status of call wait for example, according to the RBT detection method of the present invention, when the called signal is determined to be neither a busy tone nor an ordinary RBT, the switched network shall connect the calling party and the called party and the calling party will hear a prompt such as "the subscriber you dialed is busy now, please hold on"; because the status of the called signal is still in the check process in accordance with the present invention, once the called signal is detected to be an ordinary RBT, the CRBT Play module will play a CRBT, therefore the calling party will not hear the ordinary RBT after the prompt.

It should be emphasized that the above-described embodiments, particularly, any 'preferred' embodiments, are merely possible examples of implementations, merely set forth for a clear understanding of the principles of the invention. Many variations and modifications may be made to the above-described preferred embodiment without departing substantially from the spirit and principles of the invention. All such modifications and variations are intended to be included herein within the scope of this disclosure and the above-described preferred embodiment and protected by the following claims.

## Claims

1. A system for ring back tone RBT detection, comprising:
a mute check module, configured to receive a called signal, check whether the called signal is a mute signal according to the energy of the called signal, and transmit the called signal to an ordinary RBT check module if the called signal is not a mute signal; and
the ordinary RBT check module, configured to check whether the called signal is an ordinary RBT according to a frequency and a duty ratio of the called signal transmitted by the mute check module,.

2. The system according to Claim 1, wherein the system further comprises a Coloring Ring Back Tone CRBT play module configured to transmit a CBRT to a switched network upon receiving a launch instruction from the ordinary RBT check module; and
the ordinary RBT check module is further configured to transmit the launch instruction to the CRBT Play module when it is determined that the called signal is the ordinary RBT.

3. The system according to Claim 1, wherein the system further comprises a busy prompt play module configured to transmit a busy prompt to the switched network upon receiving a launch instruction from the ordinary RBT check module; and
the ordinary RBT check module is further configured to check whether the called signal is a busy signal, and transmit the launch instruction to the busy prompt play module if the called signal is a busy signal.

4. The system according to Claim 1, wherein the system further comprises a decoding module configured to receive the called signal, convert the called signal into a linear signal and transmit the linear signal to the mute check module.

5. A method for ring back tone detection, comprising:
A) measuring energy of a called signal, and checking whether the energy of the called signal is lower than a predetermined mute-related energy threshold; if the energy of the called signal is lower than the predetermined energy threshold, determining that the called signal is a mute signal and terminating the process; otherwise measuring the frequency of the called signal and checking whether the frequency of the called signal equals a prescribed frequency of an ordinary RBT; if the frequency of the called signal equals the prescribed frequency, performing Step B, otherwise determining that the called signal is an audio signal which is neither a busy tone nor a normal RBT and terminating the process; and
B) measuring a duty ratio of the called signal, and checking whether the duty ratio of the called signal equals a prescribed duty ratio of the ordinary RBT; if the duty ratio of the called signal equals the prescribed duty ratio, determining that the called signal is an ordinary RBT and terminating the process; otherwise determining that the called signal is a non-ordinary RBT and terminating the process.

6. The method according to Claim 5, wherein the prescribed frequency of the ordinary RBT in the process A is 450Hz.

7. The method according to Claim 5, wherein the prescribed duty ratio of the ordinary RBT in the process B is 1: 4.

8. The method according to Claim 5, before measuring the energy of the called signal in the process A, further comprising:
converting the called signal into a linear signal.

9. The method according to Claim 5, after determining that the called signal is the non-ordinary RBT and before terminating the process, further comprising:
checking whether the duty ratio of the called signal equals a prescribed duty ratio of the busy signal; if the duty ratio of the called signal equals the prescribed duty ratio, determining that the called signal is the busy tone and terminating the process; otherwise determining that the called signal is an audio signal which is neither the busy tone nor the ordinary RBT.

10. The method according to Claim 9, wherein the prescribed duty ratio of the busy tone is 1: 1.

11. The method according to Claim 5 or 9, after determining that the called signal is the mute signal, or the ordinary RBT, or the busy signal, or the audio signal which is neither the busy tone nor the ordinary RBT, and before terminating the process, further comprising:
returning to Step A.

12. The method according to Claim 11, after determining that the called signal is the mute signal, or the ordinary RBT, or the busy signal, or the audio signal which is neither the busy tone nor the ordinary RBT, and before returning to Step A, further comprising:
checking whether an answer signal is received from the called party; if an answer signal is received from the called party, connecting the calling party and the called party, and terminating the process; otherwise returning to Step A.

13. The method according to Claim 5 or 9, after determining that the called signal is the audio signal which is neither the busy tone nor the ordinary RBT in Step A or B and before returning to Step A, further comprising :
connecting the calling party and the called party.

14. The method according to Claim 5, after determining that the called signal is the ordinary RBT and before terminating the process in Step B, further comprising:
playing a CRBT to the calling party

15. The method according to Claim 9, after determining that the called signal is the busy tone and before terminating the process in Step B, further comprising:
playing to the calling party a prompt indicating that the called party is busy.
